# EUROPEAN PATENT SPECIFICATION

(11) **EP 3 232 222 B1**
(45) Date of publication and mention of the grant of the patent: **15.06.2022**
(21) Application number: 16164799.5
(22) Date of filing: 12.04.2016
(51) Int. Cl.: G01S 13/88

(54) **A RADAR SENSOR UNIT WITH TWO HOUSING PARTS**
RADARSENSOREINHEIT MIT ZWEI GEHÄUSETEILEN
UNITÉ DE DÉTECTION DE RADAR COMPORTANT DEUX PARTIES DE LOGEMENT

(43) Date of publication of application: 18.10.2017
(73) Proprietor: Veoneer Sweden AB, 447 83 Vårgårda (SE)
(72) Inventor: Kühne, Viktor, 13595 Berlin (DE); Brandenburg, Uwe, 88677 Markdorf (DE)
(74) Representative: Westpatent AB

(56) References cited:
- EP-A1- 1 895 823
- WO-A1-2011/082947
- DE-A1-102011 084 727
- DE-A1-102012 111 184
- DE-C1- 19 820 703
- DE-U1- 9 318 985
- US-A1- 2014 226 295

## Description

### DESCRIPTION OF THE DISCLOSURE

The present disclosure relates to a radar sensor unit comprising a housing and at least a first circuit board (PCB) arranged to be mounted in the housing. The housing comprises a connector module, a main housing part and a cover lid that is arranged to cover the main housing part.

In several technical fields, for instance in the control of safety systems on board a motor vehicle, it is desirable to have a radar system, where at least a part of the radar system comprises a radar sensor unit that comprises a housing having a main housing part and a cover lid. The housing is arranged to contain one or more PCB:s (Printed Circuit Board), onto which several electronic components are mounted, together with an antenna arrangement with both transmitting antenna devices and receiving antenna devices. The housing with its cover lid protects its internal components against mechanical damage and various environmental influences.

Such a cover lid normally also acts as an antenna radome that is easy to mount, and is made in the form of a plastic lid that either is screwed into place, or have snap connectors in the form of hooks that engage corresponding protrusions, for example as illustrated in US 8095276.

The document WO 2011/082947 describes a housing for a motor vehicle control device. The housing comprises a circuit board where an electrical connection is formed between a contact element of the first circuit substrate and at least one corresponding contact spring element of a connector receptacle.

The document US 2014/226295 relates to connector terminals that include a board connecting portion and a wire connecting portion to which a multitude of wires are connected. For this purpose, the wire connecting portion includes left and right conductor barrels and left and right insulation barrels.

Furthermore, it is desired to have an uncomplicated and reliable connection; many types of different types of connectors have been described in prior art.

It is therefore an object of the present disclosure to provide a radar sensor unit comprising a housing containing one or more PCB:s and possibly other parts such as antenna devices, where the sensor unit also comprises an uncomplicated and reliable connector arrangement.

For such a housing it may be desired to obtain electromagnetic shielding for some components, and to have an uncomplicated assembly of all contents of the housing, for example the PCB:s and the antenna devices.

This object is achieved by means of radar sensor unit comprising a housing and at least a first circuit board (PCB) arranged to be mounted in the housing. The housing comprises a connector module, a main housing part and a cover lid that is arranged to cover the main housing part. The connector module comprises one or more connector pin parts that are held in stable positions in the connector module (14) and are arranged to protrude into the housing and make electrical and mechanical contact with a receiving pin connector that is electrically connected to the PCB. The cover lid comprises a first pin aperture and the main housing part comprises a corresponding second pin aperture. The connector pin parts are arranged to run through the pin apertures in order to enter the housing, where each connector pin part comprises a resilient compressible eye part that is arranged to be compressed when inserted into a corresponding eye aperture comprised in the receiving pin connector. The compressible eye part is arranged to be resiliently pressed against a corresponding conductor comprised in the receiving pin connector such that electrical contact is obtained between the each connector pin part and the corresponding conductor when the connector pin parts are inserted via the pin apertures in order to enter the housing. Each connector pin part further comprises a resilient hook member that is arranged to work as a fluke, such that when a connector pin part is inserted into the housing, its hook member is arranged to engage the cover lid such that the corresponding connector pin part is prevented from being output from the housing.

According to an example, the connector module comprises a sealing gasket and a carrier material through which the connector pin parts extend. The cover lid comprises a connector shroud that is arranged to receive the sealing gasket and the carrier material, which carrier material has a certain extension within the connector shroud, is in contact with the sealing gasket, and is arranged to provide stability to said connector pin parts.

According to another example, the cover lid and the main housing part are attached to each other by means of at least one of:
- press-fitting between the housing sides and the cover sides;
- an adhesive.

According to another example, the radar sensor unit comprises a plurality of PCB:s and an intermediate metal layer. One PCB comprises antenna elements and the intermediate metal layer is positioned between said PCB and at least one other PCB. Said other PCB is positioned between the metal layer and the main housing part.

In this manner, an EMI (Electromagnetic Interference) shielding is provided that is easily mounted where needed. Furthermore, the cover lid is arranged to act as an antenna random.

According to another example, the radar sensor unit comprises distance pins that are arranged to run through each PCB, and the metal layer. The PCB:s and the metal layer each comprise corresponding apertures that are arranged to be threaded onto the distance pins and retained by means of press-fitting between the distance pins and the corresponding apertures.

According to another example, the cover lid comprises at least three integrated guiding pins where the PCB:s and the intermediate metal layer comprise apertures that correspond to the integrated guiding pins such that the PCB:s and the intermediate metal layer are threaded onto the integrated guiding pins into the cover lid.

According to another example, the radar sensor unit comprises an antenna shield that is formed in a conductive material. The radar sensor unit is either threaded onto the distance pins or the integrated guiding pins.

Other examples are disclosed in the dependent claims.

A number of advantages are obtained by means of the present disclosure. Mainly, a radar sensor unit comprising a housing is provided, where the housing is arranged to contain one or more PCB:s and possibly other parts such as antenna devices, where the sensor unit also comprises an uncomplicated and reliable connector arrangement.

### BRIEF DESCRIPTION OF THE DRAWINGS

The present disclosure will now be described more in detail with reference to the appended drawings, where:
- Figure 1: shows a top view of a vehicle;
- Figure 2: shows a schematical bottom perspective view and corresponding section view of a cover lid;
- Figure 3: shows a schematical top perspective view and corresponding section view of the cover lid;
- Figure 4: shows a schematical bottom perspective view and corresponding section view of a main housing part;
- Figure 5: shows a schematical top perspective view and corresponding section view of the main housing part;
- Figure 6: shows a schematical perspective section view of a radar sensor unit comprising a housing and its contents;
- Figure 7: shows a schematical detail perspective section view of a connector module;
- Figure 8: shows a schematical exploded perspective view of the housing contents unassembled;
- Figure 9: shows a schematical perspective view of the housing contents assembled;
- Figure 10: shows a schematical detail perspective section view of an alternative main housing part;
- Figure 11: shows a schematical bottom perspective view of an alternative cover lid;
- Figure 12: shows a schematical perspective view of an antenna shield;
- Figure 13: shows a schematical perspective section view of the alternative cover lid with components mounted;
- Figure 14: shows the view of Figure 13 with a corresponding main housing part mounted;
- Figure 15: shows a schematical perspective section view of the housing with a leaf spring holding arrangement partially mounted;
- Figure 16: shows a schematical perspective section view of the housing with a leaf spring holding arrangement mounted;
- Figure 17: shows a schematical detail perspective section view of a first alternative connector module that is not a part of the present disclosure, and is disclosed by way of example only; and
- Figure 18: shows a schematical detail perspective section view of a second alternative connector module that is not a part of the present disclosure, and is disclosed by way of example only.

### DETAILED DESCRIPTION

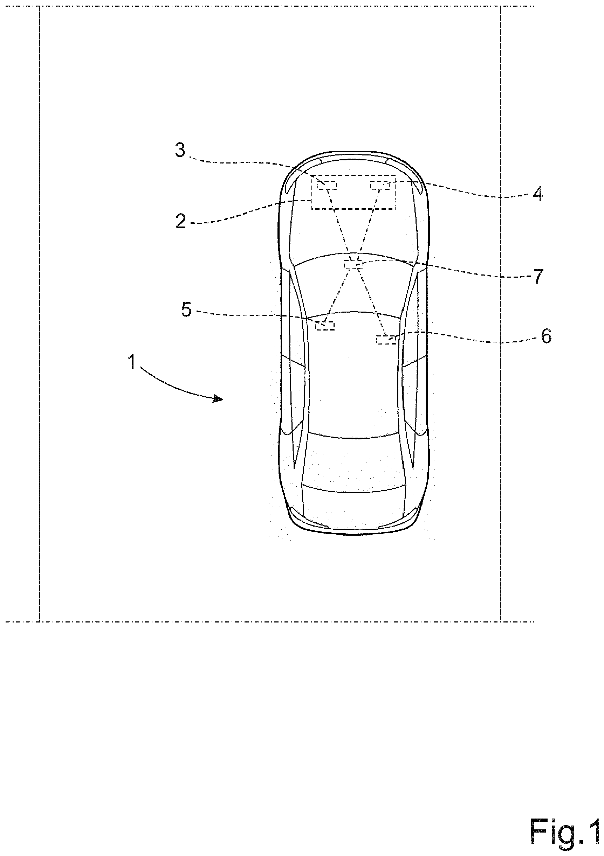

With reference to Figure 1, a vehicle 1 is shown, where the vehicle comprises a radar system 2 that in turn comprises a first radar sensor unit 3 and a second radar sensor unit 4. The radar sensor units 3, 4 are connected to a safety control unit 7 that in turn is arranged to control different safety systems 5, 6 in the vehicle 1, for example an emergency braking system 5 and a driver warning system 6.

How such a radar system 2 and safety devices 5, 6 operate is well-known in the art and will not be further discussed here. For this reason, it should be understood that the radar system 2 and safety devices 5, 6 only have been schematically indicated and described, normally comprising several components that have not been shown or discussed.

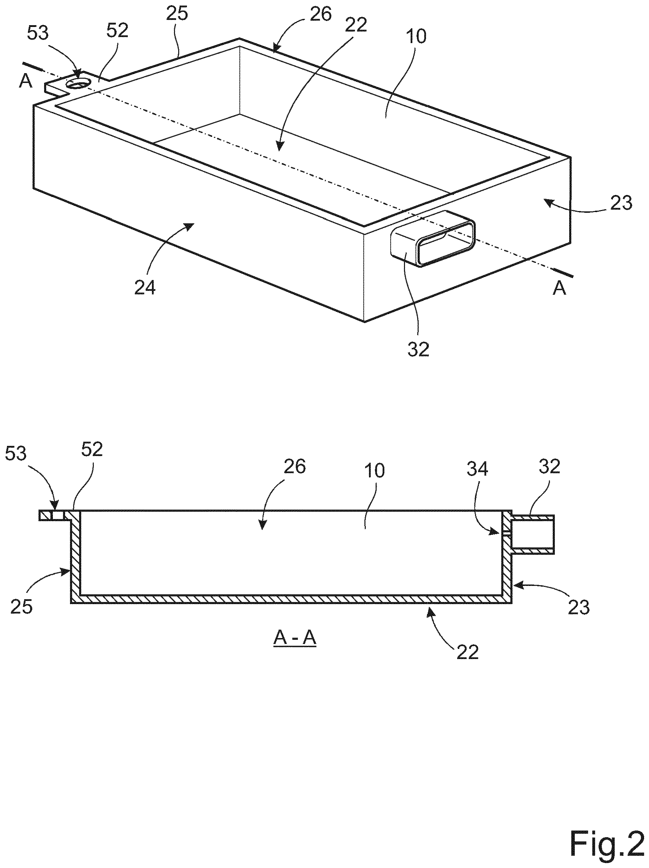

In the following, with reference to Figure 2, Figure 3, Figure 4, Figure 5 and Figure 6, the description will be directed towards the first radar sensor unit 3 which is more or less identical with the second radar sensor unit 4.

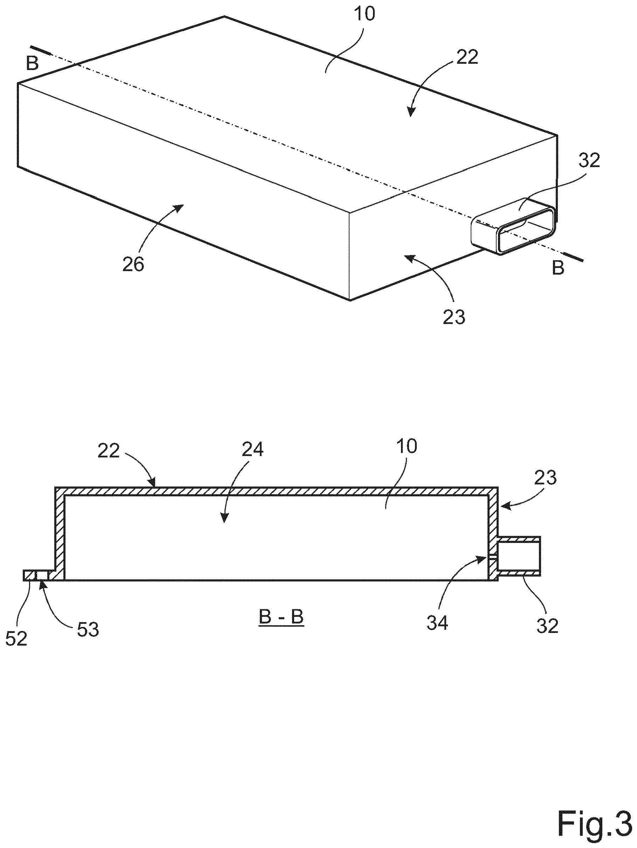

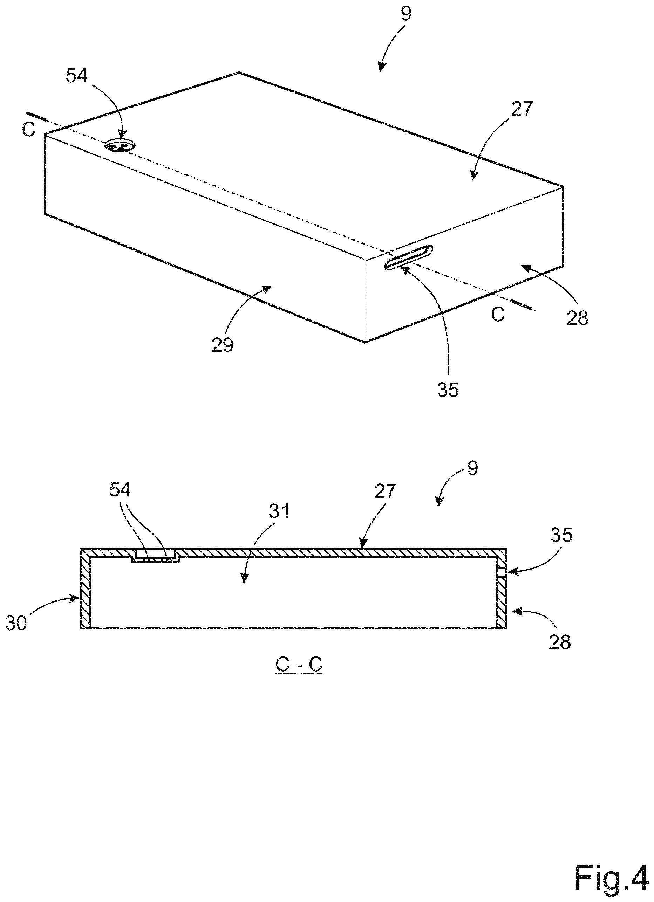

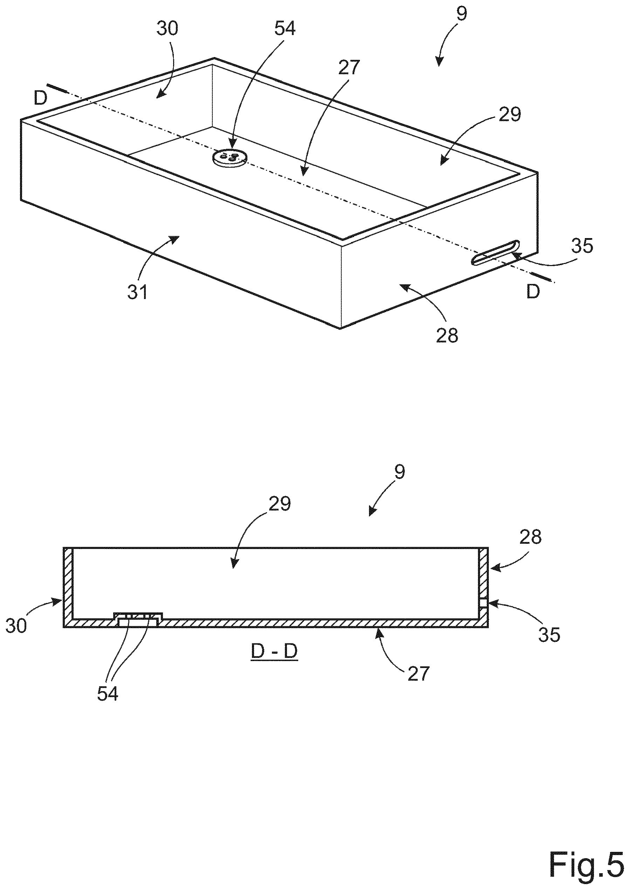

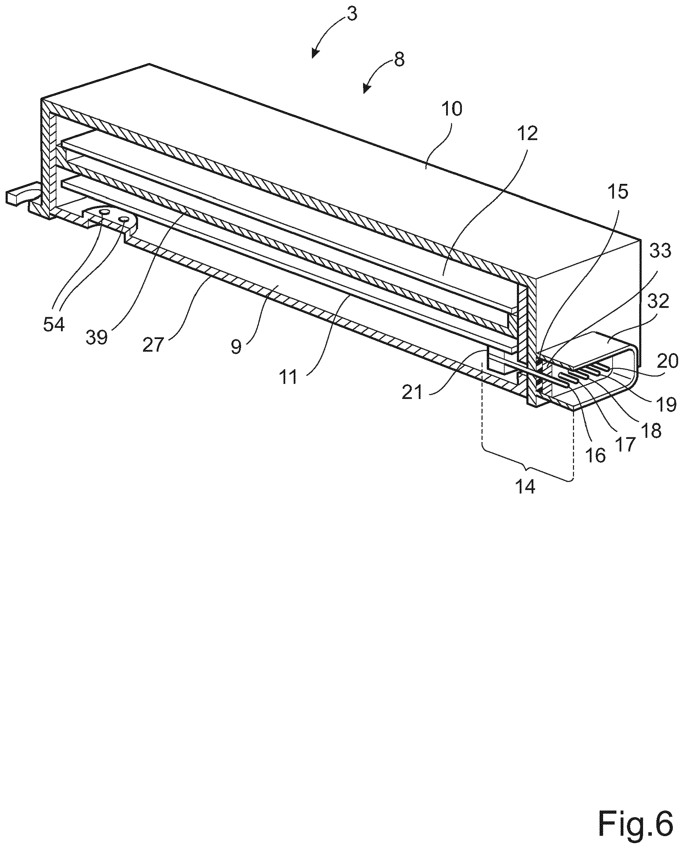

The first radar sensor unit 3 comprises a housing 8 comprising two housing parts in the form of a main housing part 9 and a cover lid 10. Figure 2 shows a bottom perspective view and corresponding section view of the cover lid 10. Figure 3 shows a top perspective view and corresponding section view of the cover lid 10. Figure 4 shows a bottom perspective view and corresponding section view of the main housing part 9. Figure 5 shows a top perspective view and corresponding section view of the main housing part 9. Figure 6 shows a perspective section view of the first radar sensor unit 3 comprising the housing 8 and its contents.

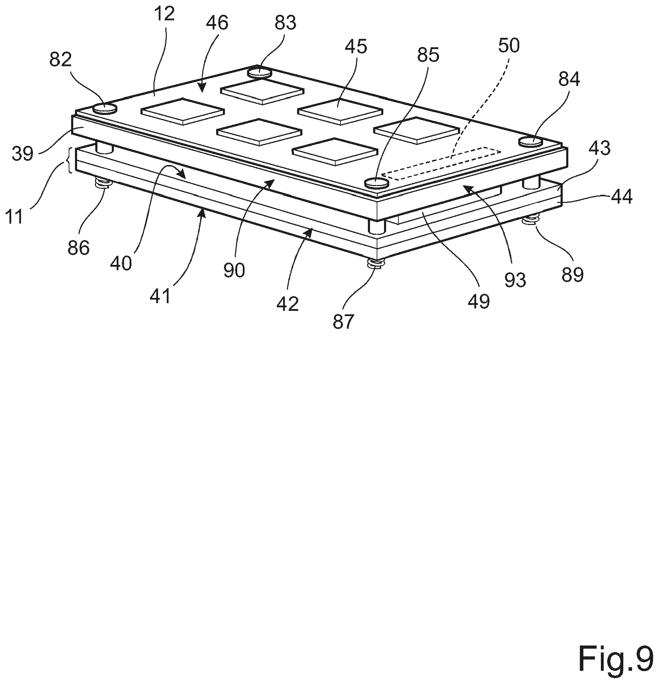

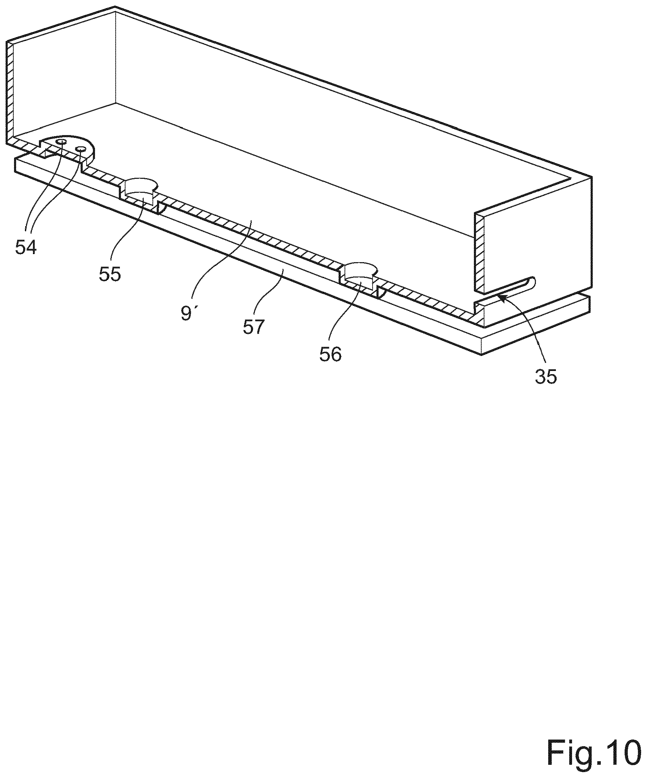

As shown in Figure 6, the housing 8 is arranged to contain a first PCB (Printed Circuit Board) 11 and a second PCB 12. The first PCB 11 comprises circuits (not shown) for generation, transmission, reception and handling of radar signals, and the second PCB 12 comprises antenna elements (shown in Figure 9 and Figure 10) that are connected to suitable circuitry on the first PCB 11.

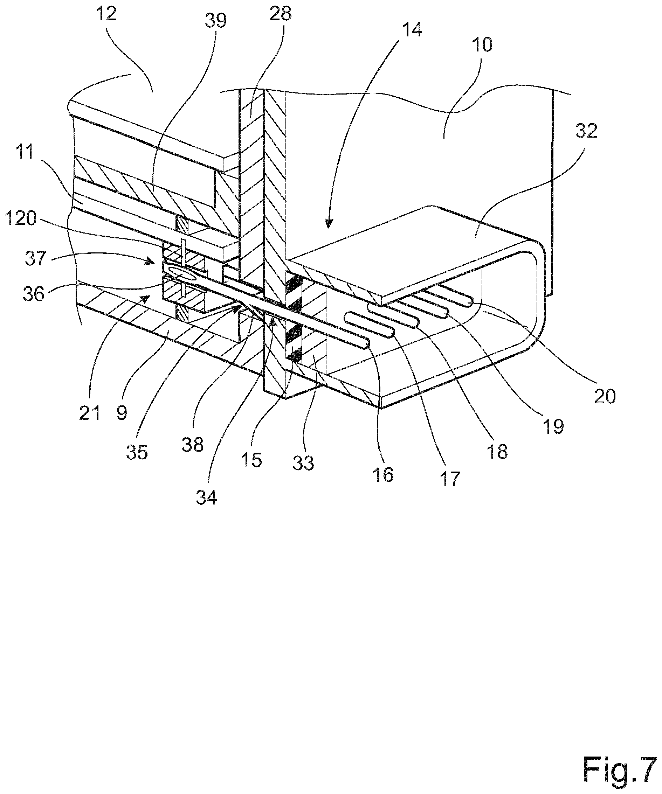

According to the present disclosure, also with reference to Figure 7 that shows a detail of a connector module 14, the connector module 14 comprises a sealing gasket 15, and connector pin parts 16, 17, 18, 19, 20, where the connector pin parts 16, 17, 18, 19, 20 are arranged to protrude into the housing 8 and make electrical and mechanical contact with a receiving pin connector 21 that is comprised in the first PCB 11, where said electrical and mechanical contact is obtained by means of press-fitting. When mounted, the pin parts constitute male connector pins, adapted to receive a female connector device, according to some aspects in order to carry electrical signals and/or voltages; for example data signals and/or bias voltages. Each connector pin part 16, 17, 18, 19, 20 is arranged to have electrical contact with a corresponding conductor 120 (only one shown) comprised in the receiving pin connector 21, where each one of these conductors 120 according to some aspects is arranged to carry corresponding electrical signals and/or voltages; for example data signals and/or bias voltages.

More details of the connector module 14 and the receiving pin connector 21 will be discussed later.

Furthermore, the cover lid 10, that in this example is made in a plastic material having suitable dielectric properties, comprises a top side 22 that is arranged to face the PCB:s 11, 12 when mounted to the main housing part 9, and the cover lid 10 also comprises cover sides 23, 24, 25, 26 that run perpendicular to the top side 22. Since the main shape of the top side 22 is rectangular in this example, there are four cover sides 23, 24, 25, 26. To facilitate mounting of the housing 8, the cover lid 10 comprises a flange 52 with an attachment hole 53.

Similarly, the main housing part 9, that in this example is made in a suitable metal material such as for example aluminum, comprises a bottom side 27 that is arranged to face top side 22 of the cover lid 10 when the cover lid 10 is mounted to the main housing part 9. The main housing part 9 also comprises housing sides 28, 29, 30, 31 that run perpendicular to the bottom side 27. Since the main shape of the bottom side 27 is rectangular in this example, there are four housing sides 28, 29, 30, 31. The main housing part 9 comprises ventilation apertures 54.

The cover lid 10 is arranged to be mounted to the main housing part 9 such that the cover sides 23, 24, 25, 26 run outside the housing sides 28, 29, 30, 31 in such a way that the cover lid 10 and the main housing part 9 are attached to each other by means of press-fitting between the housing sides 28, 29, 30, 31 and the cover sides 23, 24, 25, 26. The cover sides 23, 24, 25, 26 then at least partly cover the housing sides 28, 29, 30, 31; the housing sides 28, 29, 30, 31 may comprise protrusions (not shown) that enhance the press-fit function. In other words, the cover sides 23, 24, 25, 26 have a circumference that exceeds the circumference of the housing sides 28, 29, 30, 31, enabling the cover sides 23, 24, 25, 26 to be press-fitted outside the main housing part 9.

The housing 8 with its main housing part 9 and cover lid 10 protects the internal components against mechanical damage and various environmental influences.

According to the example shown in Figure 7, showing a detail of the connector module 14 and the receiving pin connector 21, the cover lid 10 comprises a connector shroud 32 that is arranged to receive the sealing gasket 15 and a carrier material 33 for the connector pin parts 16, 17, 18, 19, 20 that has a certain extension within the connector shroud 32 and contacts the sealing gasket 15. The connector shroud 32 is also arranged to receive a female connector device, where the carrier material 33 provides stability to the connector pin parts 16, 17, 18, 19, 20.

The cover lid 10 comprises a first pin aperture 34 and the main housing part 9 comprises corresponding a second pin aperture 35, where the connector pin parts 16, 17, 18, 19, 20 are arranged to run through the pin apertures 34, 35 in order to enter the housing 8.

The second pin aperture 35 has a slightly larger diameter than the first pin aperture 34 in order to prevent the passing connector pin parts 16, 17, 18, 19, 20 from contacting the main housing part 9 which would result in a short-circuit.

Each connector pin part 16, 17, 18, 19, 20 comprises a resilient compressible eye part 36 that is arranged to be compressed when inserted into a corresponding eye aperture 37 comprised in the receiving pin connector 21. When compressed, each eye part 36 exerts a pressure against the corresponding eye aperture 37 such that the corresponding connector pin part 16 is retained in the eye aperture 37, and such that electrical contact is obtained between the corresponding connector pin part 16 and the receiving pin connector 21.

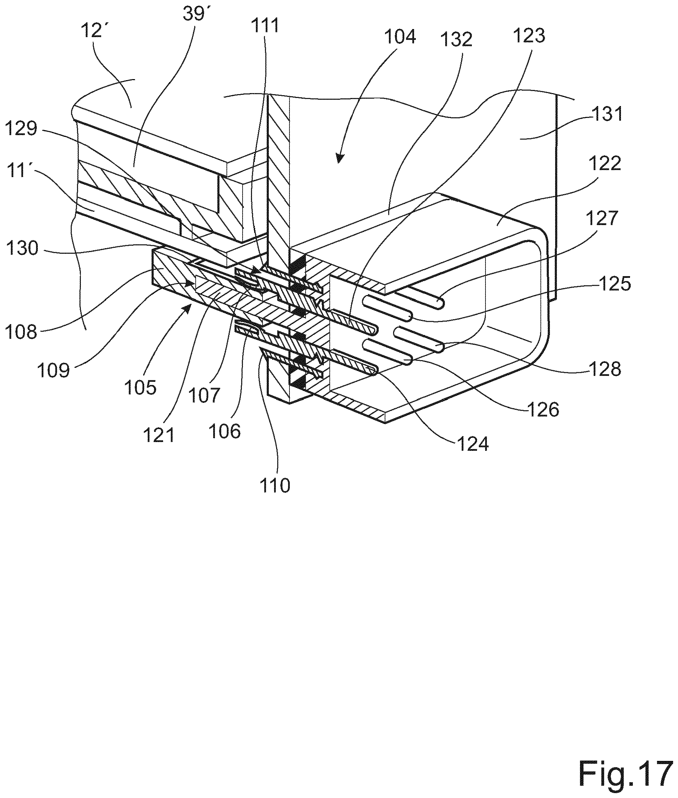

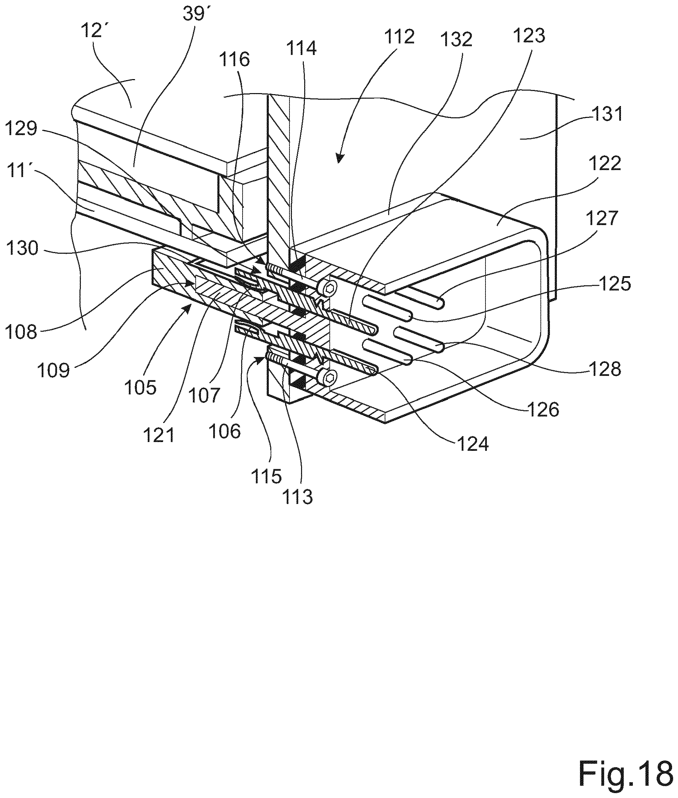

Each connector pin part 16, 17, 18, 19, 20 further comprises a resilient hook member 38 that is arranged to work as a fluke; when a connector pin part 16 is inserted into the housing, its hook member 38 is arranged to engage the cover lid 10 such that the corresponding connector pin part 16 is prevented from being output from the housing 8. The hook members may alternatively be separate parts, not being comprises in the connector pin parts, for example in the form of separate hook pins as in the examples discussed later with reference to Figure 17 and Figure 18, which examples are not a part of the present disclosure, and are disclosed by way of example only .

As shown in Figure 6, the first PCB is mounted closest to the bottom surface of the main housing part 9; then an intermediate metal layer 39 is fitted into the housing 8 such that the first PCB 11 is sandwiched between the bottom side 27 and the metal layer 39. In this way, an EMI shielding is provided for the first PCB 11. The second PCB 12 is mounted above the first PCB 11 and the metal layer 39, such that the metal layer 39 is positioned between the first PCB 11 and the second PCB 12.

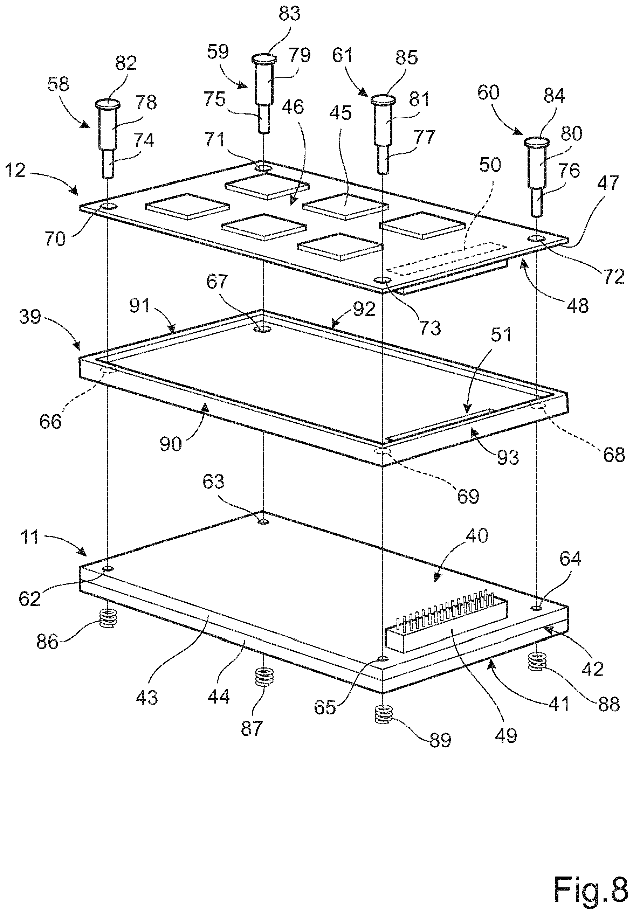

With reference also to Figure 8, showing a schematical exploded perspective view of the housing contents unassembled, and Figure 9, showing a schematical perspective view of the housing contents assembled, distance pins 58, 59, 60, 61 that act as PCB holding pins are running through the first PCB 11, the metal layer 39 and the second PCB 12. The distance pins 58, 59, 60, 61 are turned parts that are made with a certain precision such that the diameter of the distance pins correspond to corresponding apertures 62, 63, 64, 65 in the first PCB 11, corresponding apertures 66, 67, 68, 69 in the metal layer 39 and corresponding apertures 70, 71, 72, 73 in the second PCB 12. In this way, the first PCB 11, the metal layer 39 and the second PCB 12 are threaded onto the distance pins 58, 59, 60, 61 and retained by means of press-fitting between the distance pins 58, 59, 60, 61 and the corresponding apertures 62, 63, 64, 65; 66, 67, 68, 69; 70, 71, 72, 73.

Each distance pin is made with different diameters along its extension in order to provide resting shoulders. More in detail, in this example, each distance pin 58, 59, 60, 61 comprises a corresponding first part 74, 75, 76, 77, a corresponding second part 78, 79, 80, 81 and a corresponding third part 82, 83, 84, 85. Each first part 74, 75, 76, 77 is arranged to pass all apertures 62, 63, 64, 65; 66, 67, 68, 69; 70, 71, 72, 73, each second part 78, 79, 80, 81 is arranged to pass the apertures 66, 67, 68, 69; 70, 71, 72, 73 in the metal layer 39 and in the second PCB 12, and each third part 82, 83, 84, 85 is constituted by a stop plate that does not pass any one of said apertures 62, 63, 64, 65; 66, 67, 68, 69; 70, 71, 72, 73. The first parts 74, 75, 76, 77 engage corresponding spring washers 86, 87, 88, 89 that are arranged to maintain a certain distance between the first PCB 11 and the main housing part 9 when the parts shown in Figure 8 and Figure 9 are mounted in the housing.

Furthermore, the metal layer 39 comprises circumferentially running sides 90, 91, 92, 93 that are arranged for press-fitting against the housing sides 28, 29, 30, 31.

According to some aspects, the first PCB 11 is of an ordinary kind, and according to some aspects it may have three electrically conductive layers: a first outer conductive layer 40, a second conductive outer layer 41, and a central conductive layer 42, the first outer conductive layer 40 being separated from the central conductive layer 42 by a first layer 43 of a dielectric material and the second conductive outer layer 41 being separated from the central conductive layer 42 by a second layer 44 of a dielectric material. The outer conductive layers 40, 41 comprise conductive tracks and component connections (not shown in detail in Figure 8) and the central conductive layer 42 may either be constituted by a ground plane or by conductor tracks, or a combination of these.

According to some aspects, the second PCB 12 comprises etched antenna elements 45 such as patches or dipoles (patches shown in Figure 8), where these antenna elements 45 are formed in a top conductive layer 46 of the second PCB 12 that is arranged to face the top side 22 of the cover lid 10. The second PCB 12 comprises a dielectric layer 47 that according to some aspects suitably made in a low-loss second dielectric material such as for example an enforced PTFE material or a ceramic material. According to some aspects, the first dielectric material is also constituted by such a low-loss dielectric material. Ordinary glass-fiber materials or similar may alternatively be used for one or more PCB 11, 12. The second PCB 12 comprises a bottom conductive layer 48 where antenna circuits and connections may be formed and mounted.

Each conductive layer 40, 41, 42; 46, 48 is in the form of a copper cladding, where copper has been removed by means etching on the outer layers in order to form the conductive tracks and component connections. Other conductive materials may also be used such as for example gold and silver, or combinations such as gold- or silver-plated copper.

There are other methods for establishing conductive tracks and component connections which are well-known in the art, such as for example screen-printing.

An internal first connector part 49, arranged at the first PCB 11, and a second connector part 50, arranged at the second PCB 12, are used for electrically connecting the first PCB 11 to the second PCB 12, such that a feeding for the antenna elements 45 is accomplished. The connector parts 49, 50 connects via an aperture 51 in the metal layer 39. The aperture 51 may be equipped with resilient metal finger (not shown) for maintaining EMI shielding. According to some aspects, in order to prevent EMI to pass via the internal connector arrangement, an EMI filter arrangement (not shown) is positioned at the connector pins, and is for example be constituted by one or several small capacitors, and is well-known in the art.

With reference to Figure 10, showing an alternative main housing part 9a, the main housing part 9a comprises protruding contact elements 55, 56 that are arranged to contact a heatsink plate 57. In this manner, heat generated within the housing may be transferred to the heatsink plate 57 via the protruding contact elements 55, 56.

In the following, alternatives for the cover lid, the connector module and the receiving pin connector will be discussed. Details which obviously are similar to the ones described for the previous examples will not always be repeated for reasons of clarity; focus will be directed to the differing details.

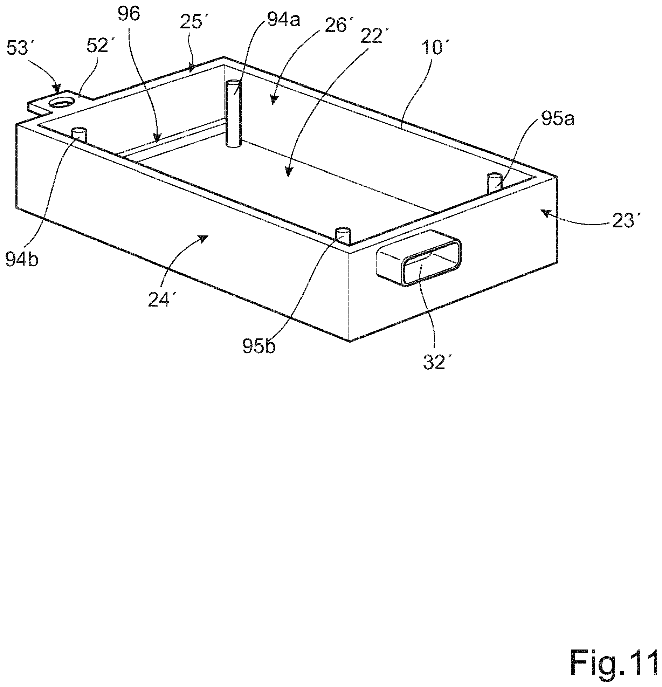

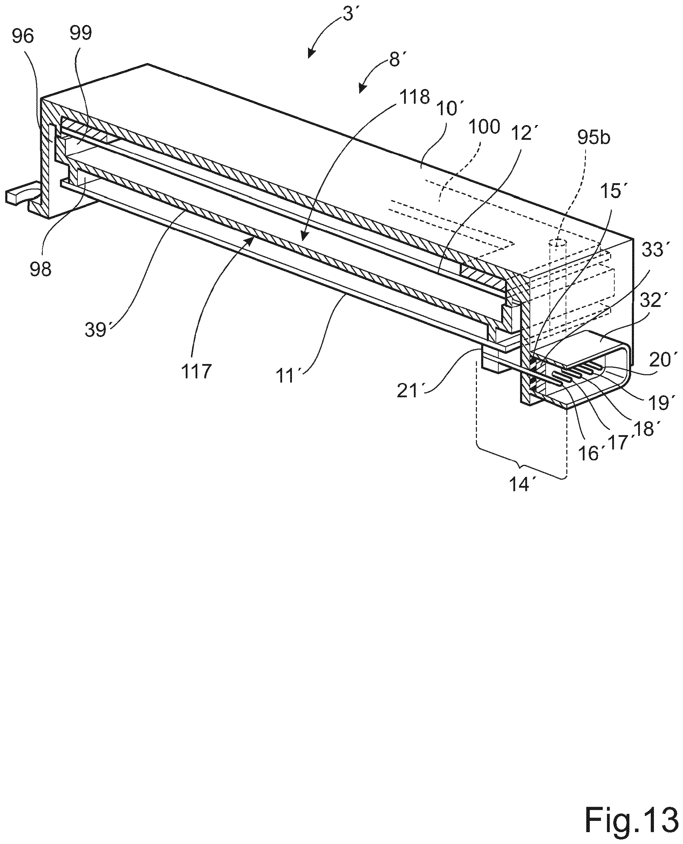

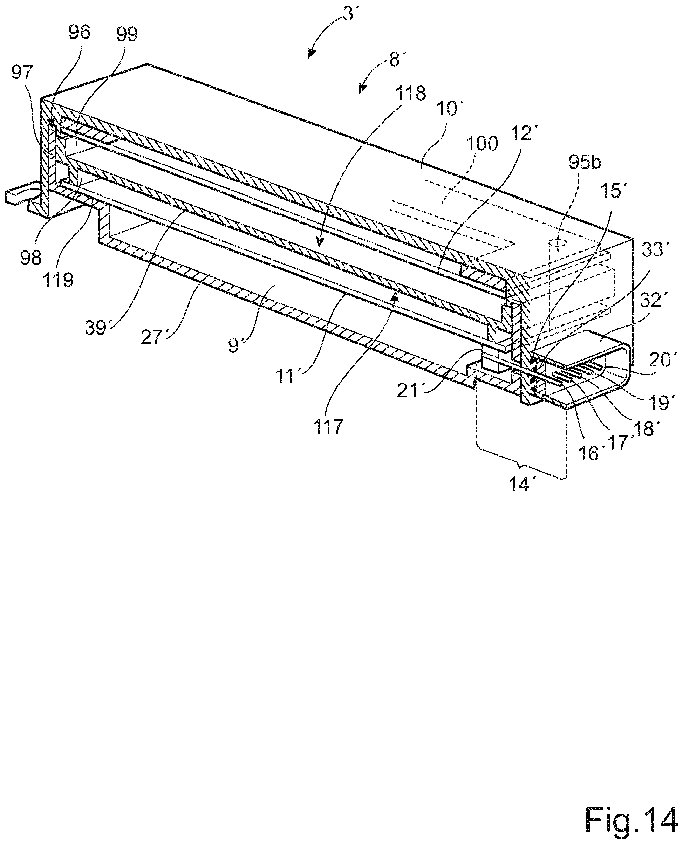

With reference to Figure 11, an alternative cover lid 10' for a radar sensor unit is shown, where this cover lid 10' comprises a top side 22' that is arranged to face a first PCB 11' and a second PCB 12' when mounted as shown in Figure 13 and Figure 14, which will be further discussed below. In this example, the cover lid 10' comprises four integrated guiding pins 94a, 94b, 95a, 95b. The integrated guiding pins 94a, 94b, 95a, 95b are thus formed in one piece together with the rest of the cover lid 10'. As for the previously described cover lid, this alternative cover lid 10' also comprises cover sides 23', 24', 25', 26' that run perpendicular to the top side 22' as well as a flange 52' with an attachment hole 53'. There is also a connector shroud 32'.

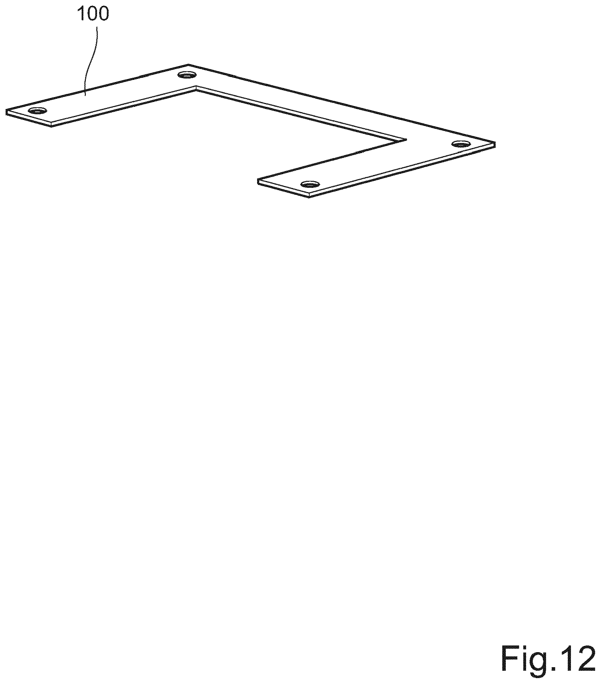

With reference to Figure 12, there is an antenna shield 100 that is formed in a conductive material such as metal or metalized plastics. The antenna shield 100 is used for proper positioning of a second PCB 12 comprising antenna elements, as shown in Figure 13 discussed below. The antenna shield 100 is also used for electromagnetic shielding.

In Figure 13, showing the radar sensor unit 3' and its housing 8' in a perspective side section view, the PCB:s 11', 12', the antenna shield 100 and an intermediate metal layer 39' are mounted to the cover lid 10', where the PCB:s 11', 12' and the intermediate metal layer 39' comprise apertures that correspond to the integrated guiding pins 94a, 94b, 95a, 95b (only one shown in Figure 13), such that the PCB:s 11', 12', the antenna shield 100 and the intermediate metal layer 39' are threaded onto the integrated guiding pins 94a, 94b, 95a, 95b into the cover lid 10'. A press-fit between the apertures in the PCB:s 11', 12' and the intermediate metal layer 39' and the integrated guiding pins 94a, 94b, 95a, 95b enables a secure attachment.

The intermediate metal layer 39' comprises circumferentially running contact edges 98, 99 on both sides, where the contact edges 98, 99 are arranged to contact the PCB:s 11', 12', making both electrical and physical contact. A first circumferentially running contact edge 98 runs on a lower side 117 of the intermediate metal layer 39', and a second circumferentially running contact edge 99 runs on an upper side 118 of the intermediate metal layer 39'. In this way, a predefined distance is maintained between the PCB:s 11, 12, and a secure ground connection is obtained between the PCB:s 11', 12' and the intermediate metal layer 39'.

As in the previously described example, there is a connector module 14' that comprises connector pin parts 123, 124, 125, 126, 127, 128 which are arranged to protrude into the housing 8' and make electrical and mechanical contact with a receiving pin connector 21' via a carrier material 33' and a sealing gasket 15' .

As shown in Figure 14, a main housing part 9' that comprises a bottom side 27' is mounted to the cover lid 10'. The cover lid 10' comprises a circumferentially running ridge pocket 96 that is pre-filled with an adhesive such as a two-component glue or similar. Circumferentially running housing sides 97 comprised in the main housing part 9' are arranged to fit into the ridge pocket 96 and to be adhered to the cover lid 10' by means of the adhesive such that a tight seal is acquired. The main housing part 9' comprises an at least partly circumferentially running contact part 119 that is arranged to contact the second PCB 12', being arranged to apply a pressure against the edge of the second PCB 12' when mounted. Depending on the placement of the connector module 14' and the receiving pin connector 21', said contact part 119 may have to be correspondingly adapted.

The housing sides 97 may also be arranged for press-fitting against the cover sides 23', 24', 25', 26'.

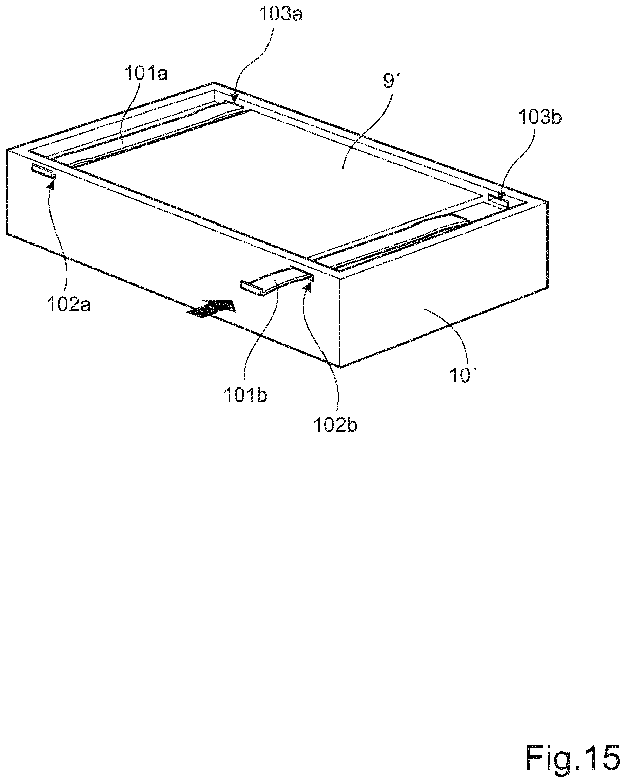

As shown in Figure 15, showing only the main housing part 9' mounted to the cover lid 10', there is a fully mounted first locking leaf spring 101a inserted into a first slot 102a in the cover lid 10' and a partly mounted second locking leaf spring 101b inserted into a second slot 102b in the cover lid 10', the locking leaf springs 101a, 101b being arranged to be running at least partially through a corresponding opposite first slot 103a and second opposite slot 103b in the cover lid 10'.

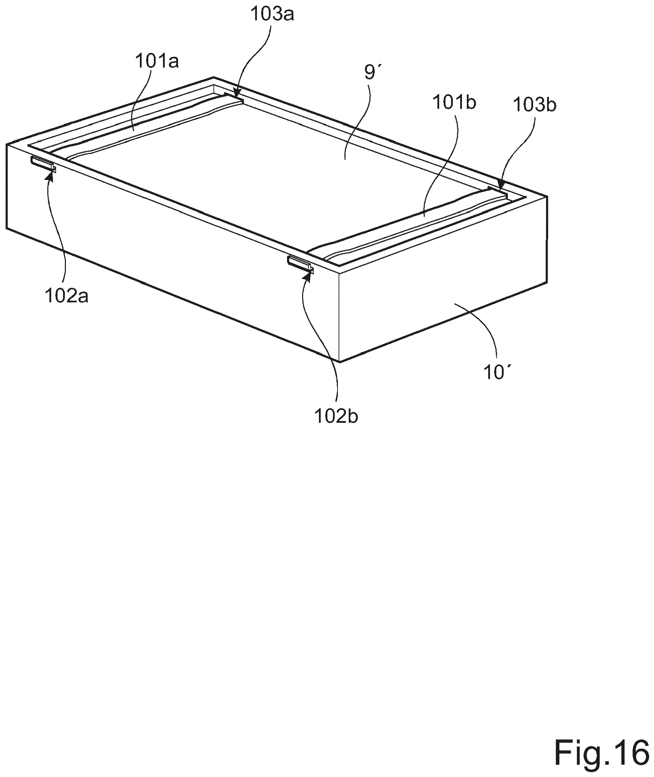

With reference also to Figure 16, where the two locking leaf springs 101a, 101b are shown fully mounted, each locking leaf spring 101a, 101b has such a shape that at its ends is arranged to apply a pressure towards a corresponding part of the slots 102a, 102b; 103a, 103b that faces away from the main housing part 9', and during a certain distance there between, the locking leaf springs 101a, 101b are arranged to apply a pressure towards the main housing part 9'. When mounted, the locking leaf springs 101a, 101b are thus arranged to exert a retaining pressure towards the main housing part 9'.

In the following, two alternative connector modules in an alternative cover lid 131 will be shown with reference to Figure 17 and Figure 18 where the main housing part has been omitted for reasons of clarity. The examples with reference to Figure 17 and Figure 18 are not a part of the present disclosure, and are disclosed by way of example only.

According to the example shown in Figure 17, showing a perspective sectional view of a detail of a first alternative connector module 104, there is a separate connector shroud 122 and an alternative receiving pin connector 105. The connector shroud 122 is here a separate part that is arranged to receive connector pin parts 123, 124, 125, 126, 127, 128 that run in two rows and have a certain extension within the connector shroud 122 and contacts a sealing gasket 132 as well as a part of the cover lid 10', where the sealing gasket 132 is sandwiched between the connector shroud 122 and the cover lid 131. The connector shroud 122 is arranged to receive a female connector device.

The cover lid 131 comprises a pin aperture 129, where the connector pin parts 123, 124, 125, 126, 127, 128 are arranged to run through the pin aperture 129. Although not being shown in Figure 17 or Figure 18, the main housing part also comprises a pin aperture that is larger than the pin aperture 129 of the cover lid 131 as in the previous example.

Each connector pin part 123, 124, 125, 126, 127, 128 comprises a corresponding resilient contact part 106, 107 that is arranged to apply a certain pressure towards a corresponding conductor 130 (only one shown) at the alternative receiving pin connector 105 such that mechanical and electrical contact are obtained between each resilient contact part 106, 107 and the corresponding conductors 130. The alternative receiving pin connector 105 is comprised in a PCB part 108 that comprises conductors 130 on both sides that are arranged to make contact with the contact part 106, 107 at both rows of connector pin parts 123, 124, 125, 126, 127, 128 as described above, and also comprises guiding pin apertures 109 (only one shown) arranged to receive corresponding guiding pins 121 (only one shown) which are comprised in the shroud 122. Each guiding pin 121 is thus arranged to run within the PCB part 108 such that guidance and stability are increased. According to some aspects, instead of guiding pins the shroud 122 comprises one guiding ridge that is arranged to be received in a corresponding slot comprised in the receiving pin connector 105.

The PCB part 108 is here shown as a separate part; according to some aspects the PCB part 108 is comprised in the first PCB 11' or the second PCB 12'.

For each connector pin part 123, 124, 125, 126, 127, 128 there is a separate resilient hook member 110, 111 that is fastened in the connector shroud 122, runs through the sealing gasket 132 and is arranged to engage the cover lid 131 such that the shroud 122 with the first alternative connector module 104 is pressed towards the cover lid 131 with the sealing gasket 132 sandwiched there between. The pin aperture of the not shown main housing part should be large enough to be clear of the resilient hook members 110, 111.

According to the example shown in Figure 18, showing a detail of a second alternative connector module 112 all details are the same as in the example described above with reference to Figure 17 except that there are no hook pins. Instead, there are screws 113, 114 that run within the connector shroud 32' and the sealing gasket 15', and are arranged to engage receiving threads 115, 116 in the cover lid 10' or alternatively in the not shown main housing part.

The present disclosure is not limited to the above, but may vary freely within the scope of the appended claims. For example, the PCB:s 11, 12 may comprise any suitable number of layers. There may be any number of PCB:s and metal layers, but there should be at least one PCB.

The housing 8 may have any suitable shape, for example cylindrical. There may also be more or less walls than those discussed in the example above depending on the shape of the housing. A circular housing may have only one circumferentially running circular side for the main housing part, the cover lid and the metal layer 39.

The main housing part 9 and the metal layer 39 does not have to be made entirely in metal, but may be made in plastic with a metal insert, a metal enclosure or as a plastic detail having metal coating on the inside or the outside. The metal layer is according to some aspects constitutes by a PCB with at least one ground plane.

All materials mentioned are only to be regarded as examples of suitable materials.

The housing according to the present disclosure is suited for radar sensor units 3, 4, and comprises at least one PCB. The antennas may be comprised in that PCB, alternatively there may be external antennas. If that is the case, the lid cover may also me made in a metal material or similar.

There should be at least three distance pins.

Between sides of different items that are press-fitted together, a sealing element may be sandwiched, for example between the between the housing sides 28, 29, 30, 31 and the cover sides 23, 24, 25, 26.

The connector pin parts are of any suitable number in one or more rows and/or columns; there is however at least one connector pin part.

Details which have been described to be circumferentially running may instead be constituted by one or more separate parts that are not circumferentially running. For example, the contact edges 98, 99 comprises in the intermediate metal layer 39' may be constituted by two or more separate parts, or one interrupted part that not runs along a complete circumference. For example, there may be two contact edges on the lower side 117 of the intermediate metal layer 39' that run along opposite sides of the intermediate metal layer 39', and two corresponding tact edges on the upper side 118 of the intermediate metal layer 39'.

The receiving pin connector 21, 105 in the examples is either comprised in one of said at least one PCB:s 11, 12, or is alternatively constituted by a separate part. This part is suitably electrically connected to at least one of said at least one PCB:s 11, 12.

The pin parts 16, 17, 18, 19, 20; 123, 124, 125, 126, 127, 128 have been described to constitute male connector pins, adapted to receive a female connector device. However, the pin parts 16, 17, 18, 19, 20; 123, 124, 125, 126, 127, 128 may according to some aspects constitute female connector pins, adapted to receive a male connector device.

All examples described could can be combined in any way; for example the antenna shield 100, the connector modules, the heatsink plate and different attachments arrangements such as press-fitting and gluing, may be comprised in any one of the examples described.

Generally, the present disclosure relates to a radar sensor unit 3, 4 comprising a housing 8 and at least a first circuit board 11, 12 (PCB) arranged to be mounted in the housing 8, where the housing 8 comprises a connector module 14, a main housing part 9 and a cover lid 10 that is arranged to cover the main housing part 9, where the connector module 14 comprises one or more connector pin parts 16, 17, 18, 19, 20 that are held in stable positions in the connector module 14 and are arranged to protrude into the housing 8 and make electrical and mechanical contact with a receiving pin connector 21. Said electrical and mechanical contact is obtained by means of resilient pressure between said connector pin parts 16, 17, 18, 19, 20 and the receiving pin connector 21 that is electrically connected to the PCB. The cover lid comprises a first pin aperture and the main housing part comprises a corresponding second pin aperture. The connector pin parts are arranged to run through the pin apertures in order to enter the housing, where each connector pin part comprises a resilient compressible eye part that is arranged to be compressed when inserted into a corresponding eye aperture comprised in the receiving pin connector. The compressible eye part is arranged to be resiliently pressed against a corresponding conductor comprised in the receiving pin connector such that electrical contact is obtained between the each connector pin part and the corresponding conductor when the connector pin parts are inserted via the pin apertures in order to enter the housing.

Each connector pin part further comprises a resilient hook member that is arranged to work as a fluke, such that when a connector pin part is inserted into the housing, its hook member is arranged to engage the cover lid such that the corresponding connector pin part is prevented from being output from the housing.

According to an example, the connector module 14 comprises a sealing gasket 15 and a carrier material 33 through which the connector pin parts 16, 17, 18, 19, 20 extend, where the cover lid 10 comprises a connector shroud 32 that is arranged to receive the sealing gasket 15 and the carrier material 33, where the carrier material 33 has a certain extension within the connector shroud 32, is in contact with the sealing gasket 15, and is arranged to provide stability to said connector pin parts 16, 17, 18, 19, 20.

According to an example, the cover lid 10, 10' comprises a first pin aperture 34, and the main housing part 9 comprises a second pin aperture 35, where said connector pin parts 16, 17, 18, 19, 20 are arranged to run through the pin apertures 34, 35 in order to enter the housing 8, 8'.

According to an example, the cover lid 10 comprises a top side 22 and cover sides 23, 24, 25, 26 that run perpendicular to the top side 22, where furthermore the main housing part 9 comprises a bottom side 27 that is arranged to face a top side 22 of the cover lid 10 when the cover lid 10 is mounted to the main housing part 9, where the main housing part 9 also comprises housing sides 28, 29, 30, 31 that run perpendicular to the bottom side 27, where the cover lid 10 is arranged to be mounted to the main housing part 9 such that the cover sides 23, 24, 25, 26 run outside the housing sides 28, 29, 30, 31.

According to an example, the cover lid 10 and the main housing part 9 are attached to each other by means of at least one of:
- press-fitting between the housing sides 28, 29, 30, 31 and the cover sides 23, 24, 25, 26;
- an adhesive.

According to an example, the radar sensor unit 3 comprises a plurality of PCB:s 11, 12 and an intermediate metal layer 39, where one PCB 12 comprises antenna elements 45, and where the intermediate metal layer 39 is positioned between said PCB 11 and at least one other PCB 12, and where furthermore said other PCB 11 is positioned between the metal layer 39 and the main housing part 9.

According to an example, the radar sensor unit 3 comprises distance pins 58, 59, 60, 61 that are arranged to run through each PCB 11, 12, and the metal layer 39, where the PCB:s 11, 12 and the metal layer 39 each comprise corresponding apertures 62, 63, 64, 65; 66, 67, 68, 69; 70, 71, 72, 73 that are arranged to be threaded onto the distance pins 58, 59, 60, 61 and retained by means of press-fitting between the distance pins 58, 59, 60, 61 and the corresponding apertures 62, 63, 64, 65; 66, 67, 68, 69; 70, 71, 72, 73.

According to an example, the cover lid 10' comprises at least three integrated guiding pins 94a, 94b, 95a, 95b where the PCB:s 11', 12' and the intermediate metal layer 39' comprise apertures that correspond to the integrated guiding pins 94a, 94b, 95a, 95b such that the PCB:s 11', 12' and the intermediate metal layer 39' are threaded onto the integrated guiding pins 94a, 94b, 95a, 95b into the cover lid 10'.

According to an example, the radar sensor unit 3, 3' comprises an antenna shield 100 that is formed in a conductive material.

The antenna shield 100 is threaded onto the distance pins 58, 59, 60, 61 or the integrated guiding pins 94a, 94b, 95a, 95b.

According to an example, the radar sensor unit 3 comprises an internal first connector part 49, arranged at one PCB 11, and a second connector part 50, arranged another PCB 12, where the connector parts 49, 50 are arranged to electrically connecting said PCB:s 11, 12 via an aperture 51 in the metal layer 39.

According to an example, the metal layer 39 comprises at least one at least partially circumferentially running side 90, 91, 92, 93 that is arranged for press-fitting against the housing sides 28, 29, 30, 31.

According to an example, the main housing part 9a comprises at least one protruding contact element 55, 56 that is arranged to contact a heatsink plate 57.

## Claims

1. A radar sensor unit (3, 4) comprising a housing (8) and at least a first circuit board (11, 12), PCB, arranged to be mounted in the housing (8), where the housing (8) comprises a connector module (14), a main housing part (9) and a cover lid (10) that is arranged to cover the main housing part (9), where the connector module (14) comprises one or more connector pin parts (16, 17, 18, 19, 20) that are held in stable positions in the connector module (14) and are arranged to protrude into the housing (8) and make electrical and mechanical contact with a receiving pin connector (21) that is electrically connected to the PCB (11), **characterized in that** the cover lid (10) comprises a first pin aperture (34) and the main housing part (9)comprises a corresponding second pin aperture (35), where the connector pin parts (16, 17, 18, 19, 20) are arranged to run through the pin apertures (34, 35) in order to enter the housing (8), whereby each connector pin part (16, 17, 18, 19, 20) comprises a resilient compressible eye part (36) that is arranged to be compressed when inserted into a corresponding eye aperture (37) comprised in the receiving pin connector (21), where the compressible eye part (36) is arranged to be resiliently pressed against a corresponding conductor (120) comprised in the receiving pin connector (21) such that electrical contact is obtained between the each connector pin part (16, 123) and the corresponding conductor (120) when the connector pin parts (16, 17, 18, 19, 20) are inserted via the pin apertures (34, 35) in order to enter the housing (8), where each connector pin part (16, 17, 18, 19, 20) further comprises a resilient hook member (38) that is arranged to work as a fluke, such that when a connector pin part (16) is inserted into the housing, its hook member (38) is arranged to engage the cover lid (10) such that the corresponding connector pin part (16) is prevented from being output from the housing (8).

2. A radar sensor unit according to claim 1, **characterized in that** the connector module (14) comprises a sealing gasket (15) and a carrier material (33) through which the connector pin parts (16, 17, 18, 19, 20) extend, where the cover lid (10) comprises a connector shroud (32) that is arranged to receive the sealing gasket (15) and the carrier material (33), where the carrier material (33) has a certain extension within the connector shroud (32), is in contact with the sealing gasket (15), and is arranged to provide stability to said connector pin parts (16, 17, 18, 19, 20).

3. A radar sensor unit according to any one of the previous claims, **characterized in that** the cover lid (10, 10') comprises a first pin aperture (34) and the main housing part (9) comprises a second pin aperture (35), where said connector pin parts (16, 17, 18, 19, 20) are arranged to run through the pin apertures (34, 35) in order to enter the housing (8, 8').

4. A radar sensor unit according to any one of the previous claims, **characterized in that** the cover lid (10) comprises a top side (22) and cover sides (23, 24, 25, 26) that run perpendicular to the top side (22), where furthermore the main housing part (9) comprises a bottom side (27) that is arranged to face a top side (22) of the cover lid (10) when the cover lid 10 is mounted to the main housing part (9), where the main housing part (9) also comprises housing sides (28, 29, 30, 31) that run perpendicular to the bottom side (27), where the cover lid (10) is arranged to be mounted to the main housing part (9) such that the cover sides (23, 24, 25, 26) run outside the housing sides (28, 29, 30, 31).

5. A radar sensor unit according to claim 4, **characterized in that** the cover lid (10) and the main housing part (9) are attached to each other by means of at least one of:
- press-fitting between the housing sides (28, 29, 30, 31) and the cover sides (23, 24, 25, 26);
- an adhesive.

6. A radar sensor unit according to any one of the previous claims, **characterized in that** the radar sensor unit (3) comprises a plurality of PCB:s (11, 12) and an intermediate metal layer (39), where one PCB (12) comprises antenna elements (45), and where the intermediate metal layer (39) is positioned between said PCB (11) and at least one other PCB (12), and where furthermore said other PCB (11) is positioned between the metal layer (39) and the main housing part (9).

7. A radar sensor unit according to claim 6, **characterized in that** the radar sensor unit (3) comprises distance pins (58, 59, 60, 61) that are arranged to run through each PCB (11, 12), and the metal layer (39), where the PCB:s (11, 12) and the metal layer (39) each comprise corresponding apertures (62, 63, 64, 65; 66, 67, 68, 69; 70, 71, 72, 73) that are arranged to be threaded onto the distance pins (58, 59, 60, 61) and retained by means of press-fitting between the distance pins (58, 59, 60, 61) and the corresponding apertures (62, 63, 64, 65; 66, 67, 68, 69; 70, 71, 72, 73).

8. A radar sensor unit according to claim 6, **characterized in that** the cover lid (10') comprises at least three integrated guiding pins (94a, 94b, 95a, 95b) where the PCB:s (11', 12') and the intermediate metal layer (39') comprise apertures that correspond to the integrated guiding pins (94a, 94b, 95a, 95b) such that the PCB:s (11', 12') and the intermediate metal layer (39') are threaded onto the integrated guiding pins (94a, 94b, 95a, 95b) into the cover lid (10').

9. A radar sensor unit according to any one of the claims 6-8, **characterized in that** the radar sensor unit (3, 3') comprises an antenna shield (100) that is formed in a conductive material.

10. A radar sensor unit according to any one of the claims 6-9, **characterized in that** the radar sensor unit (3) comprises an internal first connector part (49), arranged at one PCB (11), and a second connector part (50), arranged another PCB (12), where the connector parts (49, 50) are arranged to electrically connecting said PCB:s (11, 12) via an aperture (51) in the metal layer (39).

11. A radar sensor unit according to any one of the claims 6-10, **characterized in that** the metal layer (39) comprises at least one at least partially circumferentially running side (90, 91, 92, 93) that is arranged for press-fitting against the housing sides (28, 29, 30, 31).

12. A radar sensor unit according to any one of the previous claims, **characterized in that** the main housing part (9a) comprises at least one protruding contact element (55, 56) that is arranged to contact a heatsink plate (57).

## Patentansprüche

1. Radarsensoreinheit (3, 4), umfassend ein Gehäuse (8) und mindestens eine erste Leiterplatte (11, 12), PCB, die so angeordnet ist, dass sie in dem Gehäuse (8) montiert ist, wobei das Gehäuse (8) ein Steckverbindermodul (14), einen Hauptgehäuseteil (9) und einen Abdeckungsdeckel (10) umfasst, der so angeordnet ist, dass er den Hauptgehäuseteil (9) abdeckt, wobei das Steckverbindermodul (14) einen oder mehrere Steckverbinderstiftteile (16, 17, 18, 19, 20) umfasst, die in stabilen Positionen im Steckverbindermodul (14) gehalten werden und so angeordnet sind, dass sie in das Gehäuse (8) hineinragen und elektrischen und mechanischen Kontakt mit einem aufnehmenden Stiftsteckverbinder (21) herstellen, der elektrisch mit der Leiterplatte (11) verbunden ist, **dadurch gekennzeichnet, dass** der Abdeckungsdeckel (10) eine erste Stiftöffnung (34) umfasst und der Hauptgehäuseteil (9) eine entsprechende zweite Stiftöffnung (35) umfasst, wobei die Steckverbinderstiftteile (16, 17, 18, 19, 20) so angeordnet sind, dass sie durch die Stiftöffnungen (34, 35) verlaufen, um in das Gehäuse (8) einzutreten, wobei jeder Steckverbinderstiftteil (16, 17, 18, 19, 20) einen elastischen komprimierbaren Ösenteil (36) umfasst, der so angeordnet ist, dass er zusammengedrückt wird, wenn er in eine entsprechende Ösenöffnung (37) eingeführt wird, die in dem aufnehmenden Stiftsteckverbinder (21) enthalten ist, wobei der komprimierbare Ösenteil (36) so angeordnet ist, dass er elastisch gegen einen entsprechenden Leiter (120) gedrückt wird, der in dem aufnehmenden Stiftsteckverbinder (21) enthalten ist, sodass ein elektrischer Kontakt zwischen dem jeweiligen Steckverbinderstiftteil (16, 123) und dem entsprechenden Leiter (120) erzielt wird, wenn die Steckverbinderstiftteile (16, 17, 18, 19, 20) über die Stiftöffnungen (34, 35) eingesetzt werden, um in das Gehäuse (8) einzutreten, wobei jeder Steckverbinderstiftteil (16, 17, 18, 19, 20) ferner ein elastisches Hakenelement (38) umfasst, das so angeordnet ist, dass es als Widerhaken arbeitet, sodass, wenn ein Steckverbinderstiftteil (16) in das Gehäuse eingesetzt wird, sein Hakenelement (38) so angeordnet ist, dass es mit dem Abdeckungsdeckel (10) in Eingriff tritt, sodass der entsprechende Steckverbinderstiftteil (16) daran gehindert wird, aus dem Gehäuse (8) auszutreten.

2. Radarsensoreinheit nach Anspruch 1, **dadurch gekennzeichnet, dass** das Steckverbindermodul (14) eine Dichtung (15) und ein Trägermaterial (33) umfasst, durch das sich die Steckverbinderstiftteile (16, 17, 18, 19, 20) erstrecken, wobei der Abdeckungsddeckel (10) einen Steckverbindermantel (32) umfasst, der so angeordnet ist, dass er die Dichtung (15) und das Trägermaterial (33) aufnimmt, wobei das Trägermaterial (33) eine bestimmte Erstreckung innerhalb des Steckverbindermantels (32) aufweist, in Kontakt mit der Dichtung (15) steht und so angeordnet ist, dass es den Steckverbinderstiftteilen (16, 17, 18, 19, 20) Stabilität verleiht.

3. Radarsensoreinheit nach einem der vorstehenden Ansprüche, **dadurch gekennzeichnet, dass** der Abdeckungsdeckel (10, 10') eine erste Stiftöffnung (34) umfasst und der Hauptgehäuseteil (9) eine zweite Stiftöffnung (35) umfasst, wobei die Steckverbinderstiftteile (16, 17, 18, 19, 20) so angeordnet sind, dass sie durch die Stiftöffnungen (34, 35) verlaufen, um in das Gehäuse (8, 8') einzutreten.

4. Radarsensoreinheit nach einem der vorstehenden Ansprüche, **dadurch gekennzeichnet, dass** der Abdeckungsdeckel (10) eine Oberseite (22) und Abdeckungsseiten (23, 24, 25, 26) umfasst, die senkrecht zur Oberseite (22) verlaufen, wobei ferner der Hauptgehäuseteil (9) eine Unterseite (27), die einer Oberseite (22) des Abdeckungsdeckels (10) zugewandt angeordnet ist, wenn der Abdeckungsdeckel 10 an dem Hauptgehäuseteil (9) montiert ist, wobei der Hauptgehäuseteil (9) auch Gehäuseseiten (28, 29, 30, 31) umfasst, die senkrecht zur Unterseite (27) verlaufen, wobei der Abdeckungsdeckel (10) so angeordnet ist, dass er an dem Hauptgehäuseteil (9) montiert ist, sodass die Abdeckungsseiten (23, 24, 25, 26) außerhalb der Gehäuseseiten (28, 29, 30, 31) verlaufen.

5. Radarsensoreinheit nach Anspruch 4, **dadurch gekennzeichnet, dass** der Abdeckungsdeckel (10) und der Hauptgehäuseteil (9) durch mindestens eines der Folgenden aneinander befestigt sind:
- Presspassung zwischen den Gehäuseseiten (28, 29, 30, 31) und den Abdeckungsseiten (23, 24, 25, 26);
- einen Klebstoff.

6. Radarsensoreinheit nach einem der vorstehenden Ansprüche, **dadurch gekennzeichnet, dass** die Radarsensoreinheit (3) eine Vielzahl von PCBs (11, 12) und eine Zwischenmetallschicht (39) umfasst, wobei eine PCB (12) Antennenelemente (45) umfasst und wobei die Zwischenmetallschicht (39) zwischen der PCB (11) und mindestens einer anderen PCB (12) positioniert ist und wobei weiterhin die andere PCB (11) zwischen der Metallschicht (39) und dem Hauptgehäuseteil (9) positioniert ist.

7. Radarsensoreinheit nach Anspruch 6, **dadurch gekennzeichnet, dass** die Radarsensoreinheit (3) Abstandstifte (58, 59, 60, 61) umfasst, die so angeordnet sind, dass sie durch jede PCB (11, 12) und die Metallschicht (39) verlaufen, wobei die PCBs (11, 12) und die Metallschicht (39)jeweils entsprechende Öffnungen (62, 63, 64, 65; 66, 67, 68, 69; 70, 71, 72, 73) umfassen, die so angeordnet sind, dass sie auf die Abstandsstifte (58, 59, 60, 61) geschraubt sind und durch Presspassung zwischen den Abstandsstiften (58, 59, 60, 61) und den entsprechenden Öffnungen (62, 63, 64, 65; 66, 67, 68, 69; 70, 71, 72, 73) gehalten werden.

8. Radarsensoreinheit nach Anspruch 6, **dadurch gekennzeichnet, dass** der Abdeckungsdeckel (10') mindestens drei integrierte Führungsstifte (94a, 94b, 95a, 95b) umfasst, wobei die PCBs (11', 12') und die Zwischenmetallschicht (39') Öffnungen umfassen, die den integrierten Führungsstiften (94a, 94b, 95a, 95b) entsprechen, sodass die PCBs (11', 12') und die Zwischenmetallschicht (39') auf die integrierten Führungsstifte (94a, 94b, 95a, 95b) in den Abdeckungsdeckel (10') geschraubt sind.

9. Radarsensoreinheit nach einem der Ansprüche 6-8, **dadurch gekennzeichnet, dass** die Radarsensoreinheit (3, 3') eine Antennenabschirmung (100) umfasst, die in einem leitfähigen Material ausgebildet ist.

10. Radarsensoreinheit nach einem der Ansprüche 6-9, **dadurch gekennzeichnet, dass** die Radarsensoreinheit (3) einen inneren ersten Steckverbinderteil (49), der an einer PCB (11) angeordnet ist, und einen zweiten Steckverbinderteil (50), der an einer andere PCB (12) angeordnet ist, umfasst, wobei die Steckverbinderteile (49, 50) so angeordnet sind, dass sie die PCBs (11, 12) über eine Öffnung (51) in der Metallschicht (39) elektrisch verbinden.

11. Radarsensoreinheit nach einem der Ansprüche 6-10, **dadurch gekennzeichnet, dass** die Metallschicht (39) mindestens eine mindestens teilweise in Umfangsrichtung verlaufende Seite (90, 91, 92, 93) umfasst, die zur Presspassung an den Gehäuseseiten (28, 29, 30, 31) angeordnet ist.

12. Radarsensoreinheit nach einem der vorstehenden Ansprüche, **dadurch gekennzeichnet, dass** der Hauptgehäuseteil (9a) mindestens ein vorspringendes Kontaktelement (55, 56) umfasst, das so angeordnet ist, dass es mit einer Kühlkörperplatte (57) in Kontakt steht.

## Revendications

1. Unité de capteur radar (3, 4) comprenant un boîtier (8) et au moins une première carte de circuit imprimé (11, 12), PCB, agencée pour être montée dans le boîtier (8), dans laquelle le boîtier (8) comprend un module de connecteur (14), une partie de boîtier principale (9) et un couvercle (10) qui est agencé pour couvrir la partie de boîtier principale (9), dans laquelle le module de connecteur (14) comprend une ou plusieurs parties broche de connecteur (16, 17, 18, 19, 20) qui sont maintenues dans des positions stables dans le module de connecteur (14) et sont agencées pour faire saillie dans le boîtier (8) et établir un contact électrique et mécanique avec un connecteur de broche de réception (21) qui est électriquement connecté à la PCB (11), **caractérisée en ce que** le couvercle (10) comprend une première ouverture de broche (34) et la partie de boîtier principale (9) comprend une seconde ouverture de broche correspondante (35), dans laquelle les parties de broche de connecteur (16, 17, 18, 19, 20) sont agencées pour passer à travers les ouvertures de broche (34, 35) afin d'entrer dans le boîtier (8), moyennant quoi chaque partie de broche de connecteur (16, 17, 18, 19, 20) comprend une partie œil compressible élastique (36) qui est agencée pour être comprimée lorsqu'elle est insérée dans une ouverture d'œil correspondante (37) comprise dans le connecteur de broche de réception (21), dans laquelle la partie œil compressible (36) est agencée pour être pressée de manière résiliente contre un conducteur correspondant (120) compris dans le connecteur de broche de réception (21) de telle sorte qu'un contact électrique soit obtenu entre chaque partie de broche de connecteur (16, 123) et le conducteur correspondant (120) lorsque les parties broche de connecteur (16, 17, 18, 19, 20) sont insérées par l'intermédiaire des ouvertures de broche (34, 35) afin d'entrer dans le boîtier (8), dans laquelle chaque partie broche de connecteur (16, 17, 18, 19, 20) comprend en outre un élément de crochet résilient (38) qui est agencé pour jouer le rôle de patte, de telle sorte que lorsqu'une partie broche de connecteur (16) est insérée dans le boîtier, son élément de crochet (38) soit agencé pour venir en prise avec le couvercle (10) de telle sorte que la partie broche de connecteur correspondante (16) soit empêchée de sortir du boîtier (8).

2. Unité de capteur radar selon la revendication 1, **caractérisée en ce que** le module de connecteur (14) comprend un joint d'étanchéité (15) et un matériau porteur (33) au travers duquel les parties broche de connecteur (16, 17, 18, 19, 20) s'étendent, dans laquelle le couvercle (10) comprend une enveloppe de connecteur (32) qui est agencée pour recevoir le joint d'étanchéité (15) et le matériau porteur (33), dans laquelle le matériau porteur (33) a une certaine extension à l'intérieur de l'enveloppe de connecteur (32), est en contact avec le joint d'étanchéité (15), et est agencé pour fournir une stabilité auxdites parties broche de connecteur (16, 17, 18, 19, 20).

3. Unité de capteur radar selon l'une quelconque des revendications précédentes, **caractérisée en ce que** le couvercle (10, 10') comprend une première ouverture de broche (34) et la partie de boîtier principale (9) comprend une seconde ouverture de broche (35), dans laquelle lesdites parties broche de connecteur (16, 17, 18, 19, 20) sont agencées pour passer à travers les ouvertures de broche (34, 35) afin d'entrer dans le boîtier (8, 8').

4. Unité de capteur radar selon l'une quelconque des revendications précédentes, **caractérisée en ce que** le couvercle (10) comprend un côté supérieur (22) et des côtés de couvercle (23, 24, 25, 26) qui s'étendent perpendiculairement au côté supérieur (22), dans laquelle en outre la partie de boîtier principale (9) comprend un côté inférieur (27) qui est agencé pour faire face à un côté supérieur (22) du couvercle (10) lorsque le couvercle (10) est monté sur la partie de boîtier principale (9), dans laquelle la partie de boîtier principale (9) comprend également des côtés de boîtier (28, 29, 30, 31) qui s'étendent perpendiculairement au côté inférieur (27), dans laquelle le couvercle (10) est agencé pour être monté sur la partie de boîtier principale (9) de telle sorte que les côtés de couvercle (23, 24, 25, 26) passent à l'extérieur des côtés de boîtier (28, 29, 30, 31).

5. Unité de capteur radar selon la revendication 4, **caractérisée en ce que** le couvercle (10) et la partie de boîtier principale (9) sont fixés l'un à l'autre au moyen d'au moins l'un parmi :
- un ajustement avec serrage des côtés de boîtier (28, 29, 30, 31) et des côtés de couvercle (23, 24, 25, 26) ;
- un adhésif.

6. Unité de capteur radar selon l'une quelconque des revendications précédentes, **caractérisée en ce que** l'unité de capteur radar (3) comprend une pluralité de PCB (11, 12) et une couche métallique intermédiaire (39), dans laquelle une PCB (12) comprend des éléments d'antenne (45), et dans laquelle la couche métallique intermédiaire (39) est positionnée entre ladite PCB (11) et au moins une autre PCB (12), et dans laquelle en outre ladite autre PCB (11) est positionnée entre la couche métallique (39) et la partie de boîtier principale (9).

7. Unité de capteur radar selon la revendication 6, **caractérisée en ce que** l'unité de capteur radar (3) comprend des broches d'écartement (58, 59, 60, 61) qui sont agencées pour traverser chaque PCB (11, 12), et la couche métallique (39), dans laquelle les PCB (11, 12) et la couche métallique (39) comprennent chacune des ouvertures correspondantes (62, 63, 64, 65 ; 66, 67, 68, 69 ; 70, 71, 72, 73) qui sont agencées pour être vissées sur les broches d'écartement (58, 59, 60, 61) et retenues par ajustement avec serrage entre les broches d'écartement (58, 59, 60, 61) et les ouvertures correspondantes (62, 63, 64, 65 ; 66, 67, 68, 69 ; 70, 71, 72, 73).

8. Unité de capteur radar selon la revendication 6, **caractérisée en ce que** le couvercle (10') comprend au moins trois broches de guidage intégrées (94a, 94b, 95a, 95b) dans laquelle les PCB (11', 12') et la couche métallique intermédiaire (39') comprennent des ouvertures qui correspondent aux broches de guidage intégrées (94a, 94b, 95a, 95b) de telle sorte que les PCB (11', 12') et la couche métallique intermédiaire (39') soient vissées sur les broches de guidage intégrées (94a, 94b, 95a, 95b) dans le couvercle (10').

9. Unité de capteur radar selon l'une quelconque des revendications 6 à 8, **caractérisée en ce que** l'unité de capteur radar (3, 3') comprend un blindage d'antenne (100) qui est formé dans un matériau conducteur.

10. Unité de capteur radar selon l'une quelconque des revendications 6 à 9, **caractérisée en ce que** l'unité de capteur radar (3) comprend une première partie de connecteur interne (49), disposée au niveau d'une PCB (11), et une seconde partie de connecteur (50), disposée au niveau d'une autre PCB (12), dans laquelle les parties de connecteur (49, 50) sont agencées pour connecter électriquement lesdites PCB (11, 12) par le biais d'une ouverture (51) dans la couche métallique (39).

11. Unité de capteur radar selon l'une quelconque des revendications 6 à 10, **caractérisée en ce que** la couche métallique (39) comprend au moins un côté s'étendant au moins partiellement circonférentiellement (90, 91, 92, 93) qui est agencé pour venir en ajustement avec serrage contre les côtés de boîtier (28, 29, 30, 31).

12. Unité de capteur radar selon l'une quelconque des revendications précédentes, **caractérisée en ce que** la partie de logement principale (9a) comprend au moins un élément de contact en saillie (55, 56) qui est agencé pour venir en contact avec une plaque de puits thermique (57).
